(19) Europäisches Patentamt
European Patent Office
Office européen des brevets

(11) **EP 3 413 097 A1**

(12) **EUROPEAN PATENT APPLICATION**

(43) Date of publication:
**12.12.2018 Bulletin 2018/50**

(51) Int Cl.:
**G01V 8/10** *(2006.01)*    **B66B 13/26** *(2006.01)*
**F16P 3/14** *(2006.01)*

(21) Application number: **17174937.7**

(22) Date of filing: **08.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **KONE Corporation**
**00330 Helsinki (FI)**

(72) Inventor: **KINNARI, Jouko**
**00330 HELSINKI (FI)**

(74) Representative: **Berggren Oy, Helsinki & Oulu**
**P.O. Box 16**
**Eteläinen Rautatiekatu 10A**
**00101 Helsinki (FI)**

(54) **SOLUTION FOR MONITORING A CONDITION OF A CURTAIN OF LIGHT**

(57)    The invention relates to a method for evaluating a performance of a curtain of light (310) operatively coupled to a door comprising at least one door panel. The method comprises: receiving a value representing signal strength of a signal received in a receiver (120B) from at least one transmitter (120A); determining (220) a performance value for the curtain of light from the received information; analyzing (230) the performance value by comparing it to at least one previously determined performance value; and generating (240) an indication signal in response to a detection that the determined performance deviates from the at least one previously determined performance value over a predetermined limit. Some aspects of the invention relates to a door arrangement.

```
          START
            │
            ▼
210  ┌─────────────────┐
     │ Receive information │◄──┐
     └─────────────────┘   │
            │              │
            ▼              │
220  ┌─────────────────┐   │
     │ Determine        │   │
     │ performance value│   │
     │ from received    │   │
     │ information      │   │
     └─────────────────┘   │
            │              │
            ▼              │
230  ┌─────────────────┐   │
     │ Analyse          │───┘
     └─────────────────┘
            │
            ▼
240  ┌─────────────────┐
     │ Indication       │
     └─────────────────┘
            │
            ▼
           END
```

**FIG. 2**

EP 3 413 097 A1

**Description**

TECHNICAL FIELD

The invention concerns in general the technical field of monitoring solutions. Especially the invention concerns a solution for monitoring a condition of a curtain of light.

BACKGROUND

Curtain of light is optical-electronic device that is used for object detection as a sensor in order to provide information to some other device. Typical example of utilization area is safety solutions in which there is need to safeguard that no object is within a specific distance from a device or similar. The curtains of light are also widely used in automatic door solutions wherein there is a need to safeguard that no person is between the doors when they are being closed.

A typical light curtain comprises two columns wherein a first column consists of light emitters and a second column consists of light receivers. The column of light emitters emits one or more light beams that are detected by the column of light receivers. Additionally, the curtain of light comprises a control unit configured to control the operation and store information, such as state information on the curtain of light. The curtain of light operates internally so that it monitors the signal strength perceived by the receivers. If the signal strength is higher than a fixed limit value (recognition threshold), it is assumed that there are no obstructions on a line drawn between the transmitter and the receiver.

Usually, the light beams emitted from the transmitter are sequenced, one after the other, and pulsed at a specific frequency. The receivers may be designed to only accept this specific pulse and frequency. This enables the rejection of spurious infrared light and, thus, enhances their suitability as components within a safety system. Moreover, it may be arranged that only one receiver may receive the light beam from one transmitter or in some other implementation the transmitted light beam from one transmitter may be detected by a plurality of receivers. This kind of implementations may be achieved through sequencing the operation of either the transmitters or receivers or both.

The drawback in the use of curtains of light is that they are sensitive to dirt and dust. As well, electronics in the curtain of light degrade over time. Both of these result in that the receiver side may not receive enough information from the emitting side which, in turn, generates malfunction of the curtain of light and, thus, of the whole system wherein the curtain of light is used. Moreover, malfunction in a curtain of light is a major source of service callouts in different areas, such as in elevator solutions.

A specific problem in the utilization area of curtains of light is that the malfunction situations happen unexpectedly. An unexpected malfunction leads to a significant harm in the utilization of the system in which the curtain of light is used. This may cause enormous costs, in the worst case.

Hence, there is need to develop solutions, wherein the drawbacks as described above are at least partially mitigated, and which improve operational reliability of the curtain of lights.

SUMMARY

An objective of the invention is to present a method and an arrangement for evaluating a performance of a curtain of light. Another objective of the invention is that the method and the arrangement are applicable in door solutions.

The objectives of the invention are reached by a method and an arrangement as defined by the respective independent claims.

According to a first aspect, a method for evaluating a performance of a curtain of light operatively coupled to a door comprising at least one door panel is provided, the curtain of light comprising: at least one transmitter and at least one receiver arranged to receive a signal from the at least one transmitter; a control unit; wherein the method comprises: receiving information from the at least one receiver, the information comprising a value representing signal strength of a signal received in the receiver from the at least one transmitter; determining a performance value for the curtain of light from the received information; analyzing the performance value by comparing it to at least one previously determined performance value; and generating an indication signal in response to a detection in the analysis that the determined performance deviates from the at least one previously determined performance value over a predetermined limit.

The method may further comprise: controlling that there is no obstruction between in the operational area of the curtain of light by monitoring and detecting if a predetermined amount of receivers generate a signal strength being below a predetermined level when the information for the performance evaluation is received.

Moreover, the method may further comprise controlling that there is no obstruction between in the operational area of the curtain of light by controlling the door being closed when the information for the performance evaluation is received.

The determined performance value may represent an average of minimum signal strength values of the at least one transmitter and the at least one receiver arranged to receive a signal from the at least one transmitter.

The analysis may comprise a generation of a prediction on the performance of the curtain of light based on the comparison.

According to a second aspect, a door arrangement for evaluating a performance of a curtain of light is provided, the door arrangement comprising: a door comprising at least one door panel, and the curtain of light operatively coupled to the door; the curtain of light comprising: at least one transmitter and at least one receiver arranged to receive a signal from the at least one transmitter; a control unit; wherein the control unit is configured to: receive information from the at least one receiver, the information comprising a value representing signal strength of a signal received in the receiver from the at least one transmitter; determine a performance value for the curtain of light from the received information; analyze the performance value by comparing it to at least one previously determined performance value; and generate an indication signal in response to a detection in the analysis that the determined performance deviates from the at least one previously determined performance value over a predetermined limit.

The control unit may further be configured to control that there is no obstruction between in the operational area of the curtain of light by monitoring and detecting if a predetermined amount of receivers generate a signal strength being below a predetermined level when the information for the performance evaluation is received.

Moreover, the control unit may further be configured to control that there is no obstruction between in the operational area of the curtain of light by controlling the door being closed when the information for the performance evaluation is received.

The determined performance value may represent an average of minimum signal strength values of the at least one transmitter and the at least one receiver arranged to receive a signal from the at least one transmitter.

The control unit may be configured to generate a prediction on the performance of the curtain of light based on the comparison during the analysis.

The control unit may be one of the following: a data processing device residing at the location of the door arrangement, a central server or cloud resource accessible over communication network by the door arrangement.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings.

BRIEF DESCRIPTION OF FIGURES

The embodiments of the invention are illustrated by way of example, and not by way of limitation, in the figures of the accompanying drawings.

Figures 1 A and 1 B schematically illustrates examples of door implementations in which curtains of light are used.

Figure 2 schematically illustrates an example of the method according to the present invention.

Figure 3 illustrates schematically an implementation of the invention according to an embodiment of the invention.

Figure 4 schematically illustrates an example of a control process in an embodiment of the invention.

Figure 5 schematically illustrates a further example of a control process in an embodiment of the invention.

DETAILED DESCRIPTION

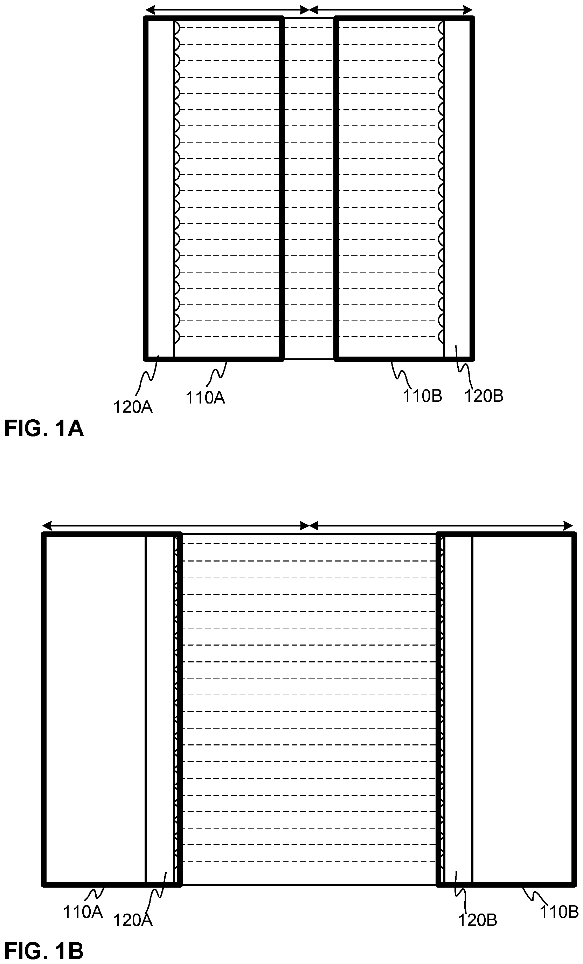

Figures 1A and 1B schematically illustrate examples of door implementations in which curtains of light are used. Especially, the Figures 1A and 1B illustrate two possible implementations for mounting curtain of light elements, i.e. transmitter unit and receiver unit, in a door of sliding type. A sliding door comprises one or two door panels 110A, 110B arranged to move in a door frame. The movement of the door panels 110A, 110B is achieved by controlling an operation of door motors configured to provide necessary force to move the door panels 110A, 110B either synchronously or asynchronously along frames, wherein an applicable rail is arranged. In the implementation as illustrated in Figure 1A the transmitter unit 120A and the receiver unit 120B configured to generate the curtain of light are configured to be mounted statically in the door frame so that they do not follow the door panels 110A, 110B when they are moving. In the implementation as illustrated in Figure 1B the transmitter unit 120A and the receiver unit 120B generating the curtain of light are mounted on the edges of corresponding door panels 110A, 110B which means that the transmitter unit 120A and the receiver unit 120B move with the doors.

In addition to the schematic examples of Figure 1A and Figure 1B the transmitter unit 120A and the receiver unit 120B forming the curtain of light may be arranged so that either the transmitter unit 120A or the receiver unit 120B is mounted on the edge of a door panel and the other one is mounted on the door frame. Moreover, the transmitter unit 120A and the receiver unit 120B may be mounted so that directions of the light beams are essentially vertical. In such a case the door may be configured to operate vertically.

In the implementations as schematically illustrated in at least Figures 1A and 1B there is for each transmitting light source, such as for each LED, a single receiver that receives the signal. This is a non-limiting example and in practice the signal may be transmitted by one transmitter, such as by a LED, at a time, which signal is received by a plurality of receivers. The transmitters are controlled accordingly e.g. with an applicable operation cycle scheme i.e. in sequences. For sake of clarity it is hereby mentioned that the present invention is applicable at least in the arrangements as described, but also with other types of arrangements.

At least some aspects of the present invention is now described in such a non-limiting arrangement in which there is arranged one transmitter and one receiver to operate as a TX/RX pair. As said the present invention is not limited to such an implementation only, but it may also be that a signal originated by one transmitter is received, i.e. detected, by a plurality of receivers and the information is analyzed as will be described.

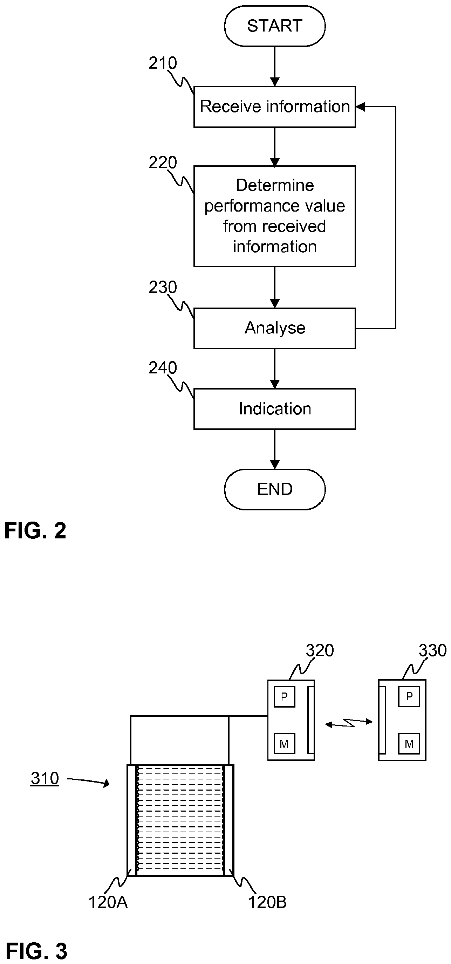

Figure 2 schematically illustrates an example of the method according to an embodiment of the present invention by means of which it is possible to detect degradation in an operation of the curtain of light originating, for example, either from degradation of an individual transmitter in the transmitter unit or an individual receiver in the receiver unit, such as individual diodes belonging to the mentioned units, or from an accumulation of foreign substance, such as dirt and/or dust, on top of the individual transmitter or the individual receiver. In a first step a control unit may be configured to monitor the operation of the curtain of light by receiving, i.e. obtaining, information 210 on the operation of one or more pairs of a light transmitter and a light receiver belonging to the curtain of light. The received information may comprise information representing either directly or indirectly signal strength of a signal received by receivers belonging to the curtain of light. Hence, the signal strength may be derived from information experienced in the receiver, such as a diode or other radiation detecting sensor applicable in the curtain of light. Typically the receiver generates a voltage which corresponds to the received light in the receiver. By means of the generated voltage it is possible evaluate an operational reliability of the curtain of light, as will be described. In order to mitigate any random behavior in one or more of the transmitters and receivers, the information may be obtained continuously. The continuous receipt, i.e. obtainment, of information may e.g. be arranged over a predetermined period of time or always when the circumstances are applicable for the receipt, i.e. obtainment, of information. It may also be arranged that a predetermined amount, such as 100 detections per receiver of a signal received from a predetermined transmitter at an instant of detection, of information is received, i.e. obtained, prior to proceeding with the method, as will be described.

Now, as information, such as signal strength information, from one or more receivers is received in the control unit, a value representing the operation, i.e. performance, of the curtain of light may be determined 220. According to an embodiment of the invention it is advantageous to evaluate the performance on a basis of the weakest measured signal strength. Hence, according to the embodiment of the present invention a minimum of all received pieces of information by at least one receiver is determined. In other words, the $S_i$ is the signal strength of the ith TX/RX pair and there may be N TX/RX pairs in the curtain of light in question. A minimum value $S_{min}$ of all signal strength values for all TX/RX pairs is:

$$s_{min} = min(\{s_i\}), i = 1, \dots, N$$

As a result the minimum signal strength values for each TX/RX pairs may be determined. Based on this information a performance value may be determined for TX/RX pairs. According to an embodiment a performance value to be determined may be an average of the minimum signal strengths, $S_{min,avg}$:

$$s_{min,avg} = \frac{1}{k} \sum_{1}^{k} s_{min},$$

where k is the number of samples received during the measurement period.

In other words, $S_{min}$ determines a TX/RX pair in which the signal strength is the lowest at an instant of measurement. $S_{min,avg}$, in turn, determines the average of the minimum signal strengths during the measurement period. Instead of determining the average of the minimum signal strengths another value representing the performance value may be determined. In some embodiment the performance value may be a standard deviation of the minimum signal strength values, maximum value or minimum value of the determined values. The performance value shall be determined from the signal strength values received, i.e. obtained, when the door is in an acceptable position, or positions, i.e. the door is open and there is no obstruction within the operational area of the curtain of light.

In the next phase the performance of the curtain of light is analyzed 230 by means of the determined performance value and any previously determined performance values stored in a memory of a computing unit executing the analysis. In the analysis the aim may e.g. be to find a trend in the performance of the curtain of light, i.e. to find out if the performance is getting worse over the different measurements. For example, statistical methods may be used. Alternatively or in addition, it is possible to determine a gradient between e.g. two consecutive performance values. The analysis may also be arranged to generate a prediction on the performance of the curtain of light in case the downward trend, i.e. degradation, continues in the same pace. For example, the prediction may generate estimation on when the curtain of light will fail to operate if the progress continues similarly. For the generation of the estimation it may be defined that a predetermined number of previous measurement values are used and the outcome of the estimation may e.g. be an indication in time when the curtain of light needs to be repaired. The algorithm used for the generation of the estimation may e.g. be so called ARMAX (autoregressive moving average) model, as a non-limiting example.

Generally speaking the outcome of the analysis is an indication if the present condition and performance of the curtain of light is acceptable or not. If it still is, the monitoring process is continued. On the other hand, if the outcome reveals that the curtain of light is not performing in an acceptable manner compared e.g. to some predetermined comparison value, an indication on this may be configured to be generated and triggered 240. The indication may e.g. comprise a generation of a service request message to a corresponding party defined in the device or system performing the analysis, or an indication, such as estimation on an expected operation time of the curtain of light, as described above.

The execution of the method as described may be arranged in multiple ways regarding entities performing the described method steps. Namely, it may be arranged so that some or all of the steps are performed on the site where the curtain of light is operating e.g. by the control unit. Alternatively, at least some of the steps may be performed in a central server or in a cloud computing environment into which information received from the curtain of light is delivered in order to perform e.g. the steps 220, 230 and 240 of Figure 2.

As described, the implementation of the method may be arranged so that one performance value representing the operation of the light curtain may be provided to the analysis step. This, of course, improves the operation in the sense that the analysis procedure requires fewer resources. On the other hand, it does not enable monitoring of the single TX/RX pairs. Naturally, in some embodiment it may be arranged that the information from a plurality of RX/TX pairs may be received and each TX/RX pair is individually monitored. In this embodiment average of signal strength may be determined per each TX/RX pair in step 220. The computing, e.g. determination of the performance value per each TX/RX pair and analysis may be performed locally or remotely in a network side, such as in an application server or using cloud resources, for generating the indication if necessary.

In one advantageous implementation of the invention, as illustrated in Figure 3, the monitoring of the operation of the curtain of light 310 may be implemented so that a control unit 320 is configured to receive, i.e. obtain, information as described from the curtain of light. The received information may comprise information on the signal strength received in the receiver side 120B of the curtain of light 310. According to an embodiment the signal strength information is received from each TX/RX pair. The control unit 320 may comprise processing unit P, such as a microprocessor, and a memory M communicatively coupled to each other. Pieces of computer program code may be stored in the memory M, which computer program code defines operational instructions for the processing unit when the processing unit executes the stored computer program code. The operational instructions comprise instructions to process the information received from the curtain of light 310. For example, the processing unit 320 may determine a minimum value of all signal strength values received from the curtain of light 310. Moreover, the processing unit may be configured to determine a performance value for the TX/RX pair generating the minimum signal strength value. This may be done as described earlier. According to the embodiment of the invention the control unit 320 may be configured to transmit information, such as the performance value processed in the control unit 320, to a central server 330 being communicatively coupled to the control unit 320. The communicative coupling may be arranged in a wired manner or wirelessly. Necessary communication interfaces may be arranged in the control unit 320 and the central server in a solution according to the present embodiment. The central server 330 comprises also a processing unit and an access to a memory residing either in the central server 330 or remote to that. The central server 330 may be configured to, in response to a receipt of the performance value defined for the curtain of light, analyze the performance of the curtain of light. The analysis in this embodiment comprises at least a determination of the trend in operation of the curtain of light. In other words, it may be advantageous to find out if there can be seen continuous degradation in the operation of the curtain light concluded on the basis of information representing an operation of one or more TX/RX pairs. The central server 330 may be configured to generate an indication if the result of analysis fulfills some predetermined criterion or criteria. The indication may be generated for informing a predetermined entity about the performance of the curtain of light. Hence, the indication may comprise information that the performance of the curtain of light is not on an acceptable level or an estimation on when the curtain of light will fail to operate. The advantage of the implementation as described is that the amount of information delivered over the communication channel between the control unit and the central server is low, which saves network resources. The present invention may be implemented in other ways as described above. For example, it may be arranged that all information received from the curtain of light may be delivered to the central server 330, which is configured to perform the method steps as described.

In the following some further aspects of the invention are described. Namely, in order to receive reliable information on the performance of the curtain of light it shall be confirmed that the received information represents real operational information of the curtain of light.

As the performance measurement is performed on the site the curtain of light is operating, it is important to confirm that information indicating that at least one TX/RX pair has degraded is not originating from an object located between a transmitter and a receiver in question. Additionally, it is important to arrange the receipt of information so that if either the transmitter or the receiver or the both are configured to move, e.g. along the door panel or door panels, the information is received, or obtained, when the transmitter and the receiver locate at the same distance with respect to each other when the information is obtained, i.e. measured.

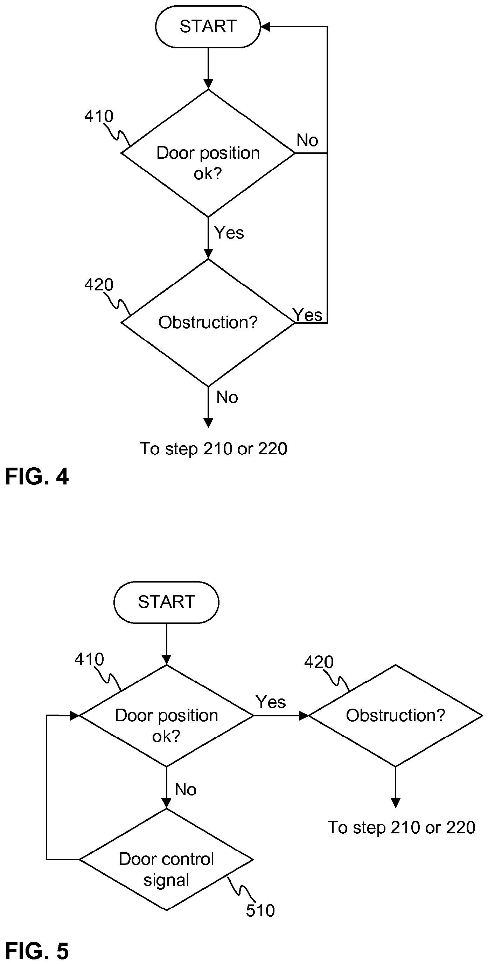

In order to safeguard a reliable performance measurement a control process may be arranged prior to the receipt, i.e. obtainment, of information. More specifically, the aim of the control process is to confirm that the information is received under similar conditions between different measurements so that it is reliable and comparable to each other. Figure 4 schematically illustrates an example of the control process in an embodiment of the invention. In the control process, as illustrated, it is first checked 410 if the door panel or panels are in such a position that the information on the performance of the transmitters and the receivers may be obtained. If this is not the case, the control process is re-initiated. If the door panel or door panels are in an acceptable position, or positions, it is checked 420 if there is any obstruction within the operational area of the curtain of light. If an obstruction is detected, it is concluded that it is not possible to obtain information from TX/RX pairs. On the other hand, if no obstruction is detected, it is possible to obtain information from the TX/RX pairs (continue with step 210) or even use the same information as used in evaluation if the obstruction exists or not (continue with step 220).

The check if the door panel(s) are in a desired position for receipt, i.e. obtainment, of information may be implemented in multiple ways. For example, it is possible to implement a sensor arrangement either in the door panel(s) or in the door frame, which is arranged to generate information on the positions of each door panel in the door assembly. For example, the sensor may be configured to measure distance between the doors, e.g. by transmitting a laser pulse between the door panels or a door panel and the door frame and measure time taken by the pulse to be reflected off the target, i.e. from the other door or from the door frame, and returned to the transmitter. The laser pulse may be generated with a laser source mounted in an optimal position in the door assembly, such as in the door frame or in the door. Alternatively or in addition, the door position may e.g. be defined with other sensors arranged e.g. on a rail along which the door panels are traveling. All in all, information on the door position may be obtained from a door operating system. Based on the position information it is possible to determine if the door panels are in a desired position with respect to each other. For example, in a case that the transmitter and the receiver of the curtain of light are fixedly mounted e.g. in the door frame an optimal door position for obtainment of information is when the door or doors are closed. This also means that there is no obstruction in the operational area of the curtain of light. Hence, in the described curtain of light implementation the control process may only comprise a detection if the door is closed or not (i.e. steps 410 and 420 in Figure 4 are combined). On the other hand, if the curtain of light is mounted to edges of door panel(s) and move together with the door panels, it is advantageous to perform the receipt of information for performance evaluation in an optimal position. In an advantageous embodiment of the invention the optimal door position for receipt of information is when the doors are fully open. This is because such a measurement gives information on the performance of the curtain of light in a condition when the receiver receives weakest amount of signal due to the distance between the receiver and the transmitter. The situation when the doors are fully open may be determined by setting a predetermined distance value for the fully open -state and perform the distance measurement e.g. in the above described manner. If the measured distance is more than the predetermined distance value, it may be decided that the doors are fully open. In response to the decision that the door is fully open, it is detected if there are any obstructions between the doors (step 420). The obstruction detection may e.g. be arranged so that information is obtained from the curtain of light. For example, the obtained information may comprise signal strengths experienced in each receiver in the receiver side. Obstruction detection from the obtained information may be performed in multiple ways. For example if the curtain of light is mounted on the door edge, it may be arranged so that if the signal strengths in a predetermined number of TX/RX pairs are significantly reduced, such as being below a predetermined level or being zero, it may be concluded that there is an object between the transmitter side and the receiver side. It may also be arranged so that if a predetermined percentage of the signal strengths of TX/RX pairs shows reduced value compared to previous measurement, it is concluded that there is an object between the transmitter side and the receiver side. If it is decided that obstruction exists, the control process is re-initiated. On the other hand if it is concluded that there is no obstruction, the control unit may be configured to utilize the received information as described, or to perform a new receipt, or obtainment, of information, i.e. read the signal strength values from the receiver side, according to the step 210 in Figure 2. The decision chain as described above may also be applied to if there is no information how the curtain of light is mounted within the door and elevator. On the other hand, if the curtain of light is mounted on the elevator car, the signal measurements, e.g. signal strength measurements, are advantageously performed when it is known that the door is elevator closed due to a fact that there should not be an object between the transmitter and the receiver side of the curtain of light.

A further embodiment of the control process is schematically illustrated in Figure 5. In this embodiment in response to a detection the door panel or door panels are positioned so that information on the performance of the transmitters and the receivers may not be obtained (step 410), the control process may comprise a further step in which a door control signal is generated and given 510 to a door motor. This causes the door panel or door panels to travel into such position that the obtainment of information on the performance of the curtain of light may be done. The desired position may be defined in a memory of the control unit 320. Further, the control unit 320 may be configured to re-check 410 the position of the door panel or panels, as depicted in Figure 5, or alternatively directly proceed to obstruction detection (step 420).

Next implementation of the present invention is described in a context of an elevator. The transmitter and the receiver sides are mounted on the door panels so that they travel along with the door panel in question. The curtain of light may e.g. be configured to operate so that it is activated when the door is open and when the elevator door is closed, the curtain of light is inactivated. In other words, the transmitters are configured to transmit light to receivers when the elevator door is opened. The operation may comprise the following steps:

a) Elevator arrives on a floor and the elevator door opens.
b) Curtain of light activates.
c) The positions of doors are determined. If the doors are in predetermined positions, e.g. fully open, the method according to the invention is continued.
d) An output is taken from the receivers by a control unit 320 comprising signal strengths experienced in one or more receivers.
e) It is determined if an obstruction exists between the transmitters and receivers of the curtain of light.
f) If no obstruction is detected, a performance value is determined by the control unit 320 either from the already received signal strength values or from signal strength values received with a new measurement.
g) The determined performance value is transmitted to an elevator service center, i.e. to a central server.
h) The central server 330 performs an analysis for the determined performance value by estimating the performance of the curtain of light in view of the determined performance and one or more previously determined performance values.
i) An indication is generated if the analysis indicates that the operational state of the curtain of light is below an acceptable level.

As may be seen above the solution according to the present invention improves the operation of the elevator and enables preparation of service action prior to a situation that the curtain of light, and thus the elevator, is not operating at all.

The curtains of light typically operate either two-dimensionally or three-dimensionally. This means that the generated light curtain forms either a plane between the transmitters and receivers or a space i.e. volume between these. The present invention is applicable with both two-dimensional and three-dimensional curtain of light solution as the signal strength derived from the received signal in the receiver(s) reflects the operation of the curtain of light also in 3D implementation.

The description of at least some inventive aspects of the present invention is given mainly in an application area of elevator doors. However, the present invention is not only limited to elevator solution, but any doors in which curtain of light may be applied to. For example, the invention may be applied to doors in buildings in which the curtain of light may be installed. The control unit 320 mentioned in the description above may refer to a data processing device residing at the location of the door arrangement and configured to perform at least some steps of the method as described. Alternatively, the control unit 320 may refer to a central server accessible over communication network by the door arrangement. In some embodiment the control unit 320 shall be understood as an entity comprising a processing unit locally with the door arrangement, which is communicatively and, hence, operatively coupled to a control unit residing in a communication network, such as central server. These two are configured to cooperate so that the method as described may be implemented to.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

**Claims**

1. A method for evaluating a performance of a curtain of light (310) operatively coupled to a door comprising at least one door panel, the curtain of light comprising:

- at least one transmitter (120A) and at least one receiver (120B) arranged to receive a signal from the at least one transmitter (120A),
- a control unit (320),

wherein the method comprises:

receiving information (210) from the at least one receiver (120B), the information comprising a value representing signal strength of a signal received in the receiver (120B) from the at least one transmitter (120A),

determining (220) a performance value for the curtain of light from the received information,

analyzing (230) the performance value by comparing it to at least one previously determined performance value, and

generating (240) an indication signal in response to a detection in the analysis that the determined performance deviates from the at least one previously determined performance value over a predetermined limit.

2. The method of claim 1, the method further comprising:

controlling that there is no obstruction (420) between in the operational area of the curtain of light by monitoring and detecting if a predetermined amount of receivers (120B) generate a signal strength being below a predetermined level when the information for the performance evaluation is received.

3. The method of claim 1, the method further comprising controlling that there is no obstruction (420) between in the operational area of the curtain of light by controlling the door being closed when the information for the performance evaluation is received.

4. The method of any of the preceding claims, wherein the determined performance value represents an average of minimum signal strength values of the at least one transmitter (120A) and the at least one receiver (120B) arranged to receive a signal from the at least one transmitter (120A).

5. The method of any of the preceding claims, wherein the analysis (230) comprises a generation of a prediction on the performance of the curtain of light based on the comparison.

6. A door arrangement for evaluating a performance of a curtain of light (310), the door arrangement comprising:

a door comprising at least one door panel, and the curtain of light (310) operatively coupled to the door, the curtain of light (310) comprising:

at least one transmitter (120A) and at least one receiver (120B) arranged to receive a signal from the at least one transmitter (120A),
a control unit (320),

wherein the control unit (320) is configured to:

receive information (210) from the at least one receiver (120B), the information comprising a value representing signal strength of a signal received in the receiver (120B) from the at least one transmitter (120A),

determine (220) a performance value for the curtain of light from the received information,

analyze (230) the performance value by comparing it to at least one previously determined performance value, and

generate (240) an indication signal in response to a detection in the analysis that the determined performance deviates from the at least one previously determined performance value over a predetermined limit.

7. The door arrangement of claim 6, the control unit (320) is further configured to control that there is no obstruction (420) between in the operational area of the curtain of light by monitoring and detecting if a predetermined amount of receivers (120B) generate a signal strength being below a predetermined level when the information for the performance evaluation is received.

8. The door arrangement of claim 6, the control unit (320) is further configured to control that there is no obstruction (420) between in the operational area of the curtain of light by controlling the door being closed when the information for the performance evaluation is received.

9. The door arrangement of any of the claims 6-8, wherein the determined performance value represents an average of minimum signal strength values of the at least one transmitter (120A) and the at least one receiver (120B) arranged to receive a signal from the at least one transmitter (120A).

10. The door arrangement of any of the claims 6-9, wherein the control unit (320) is configured to generate a prediction on the performance of the curtain of light based on the comparison during the analysis (230).

11. The door arrangement of any of the claims 6-10, wherein the control unit (320) is one of the following: a data processing device residing at the location of the door arrangement, a central server or cloud resource accessible over communication network by the door arrangement.

FIG. 1A

FIG. 1B

START

210

Receive information

220

Determine
performance value
from received
information

230

Analyse

240

Indication

END

**FIG. 2**

320    330

P       P

M       M

310

120A    120B

**FIG. 3**

START

410

Door position ok?

No

Yes

420

Obstruction?

Yes

No

To step 210 or 220

**FIG. 4**

START

410

Door position ok?

Yes

420

Obstruction?

No

Door control signal

510

To step 210 or 220

**FIG. 5**

Europäisches
Patentamt
European
Patent Office
Office européen
des brevets

**EUROPEAN SEARCH REPORT**

Application Number

EP 17 17 4937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/316410 A1 (COLLINS PETER [GB] ET AL) 5 November 2015 (2015-11-05) | 1,5,6, 10,11 | INV. G01V8/10 |
| Y | * figures 1, 4, 5 * <br> * claim 10 * <br> * paragraph [0001] - paragraph [0005] * <br> * paragraph [0027] - paragraph [0028] * <br> * paragraph [0079] - paragraph [0081] * <br> * paragraph [0091] - paragraph [0099] * | 3,4,8,9 | B66B13/26 F16P3/14 |
| X | EP 1 500 955 A1 (SPACEACE LTD [GB]) 26 January 2005 (2005-01-26) <br> * paragraph [0007] * <br> * paragraph [0024] - paragraph [0025] * | 1,2,6,7 | |
| X | Anonymous: "FF-SYA14, FF-SYA30 and FF-SYA60 - Series Safety Light Curtains", <br> , <br> 8 May 2016 (2016-05-08), XP055427523, <br> Retrieved from the Internet: <br> URL:http://www.farnell.com/datasheets/7947 .pdf <br> [retrieved on 2017-11-21] <br> * page 3, paragraph 1.1 * <br> * page 12, paragraph 2.5.5 * | 1,6 | TECHNICAL FIELDS SEARCHED (IPC) |
| Y | US 5 567 931 A (AMEND BRIAN J [US] ET AL) 22 October 1996 (1996-10-22) <br> * column 1, line 53 - line 56 * <br> * column 6, line 4 - line 7 * | 3,8 | G01V B63B F16P B66B |
| Y | CA 2 354 973 A1 (DODDS MATTHEW K [CA]) 26 January 2003 (2003-01-26) <br> * claim 6 * | 4,9 | |
| A | US 7 442 917 B1 (ROLLINS GEORGE E [US] ET AL) 28 October 2008 (2008-10-28) <br> * the whole document * | 1-11 | |

The present search report has been drawn up for all claims

| Place of search | Date of completion of the search | Examiner |
|---|---|---|
| The Hague | 27 November 2017 | Lameloise, C |

## ANNEX TO THE EUROPEAN SEARCH REPORT
## ON EUROPEAN PATENT APPLICATION NO.

EP 17 17 4937

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2017

| Patent document cited in search report | | Publication date | Patent family member(s) | | | Publication date |
|---|---|---|---|---|---|---|
| US 2015316410 | A1 | 05-11-2015 | CN | 105035926 | A | 11-11-2015 |
| | | | GB | 2526069 | A | 18-11-2015 |
| | | | US | 2015316410 | A1 | 05-11-2015 |
| EP 1500955 | A1 | 26-01-2005 | NONE | | | |
| US 5567931 | A | 22-10-1996 | AU | 695919 | B2 | 27-08-1998 |
| | | | BR | 9504511 | A | 27-05-1997 |
| | | | CN | 1132178 | A | 02-10-1996 |
| | | | EP | 0709335 | A1 | 01-05-1996 |
| | | | FI | 955071 | A | 26-04-1996 |
| | | | JP | H08208162 | A | 13-08-1996 |
| | | | MY | 132045 | A | 28-09-2007 |
| | | | TW | 336998 | B | 21-07-1998 |
| | | | US | 5567931 | A | 22-10-1996 |
| | | | ZA | 9508087 | B | 26-04-1996 |
| CA 2354973 | A1 | 26-01-2003 | NONE | | | |
| US 7442917 | B1 | 28-10-2008 | NONE | | | |

EPO FORM P0459

For more details about this annex : see Official Journal of the European Patent Office, No. 12/82